# EUROPÄISCHE PATENTSCHRIFT

(11) **EP 4 232 404 B1**
(45) Veröffentlichungstag und Bekanntmachung des Hinweises auf die Patenterteilung: **04.12.2024**
(21) Anmeldenummer: 21823739.4
(22) Anmeldetag: 15.10.2021
(51) Int. Cl.: B67D 7/02, B67D 7/06, B67D 7/34, F16L 37/16

(54) **SCHNELLWECHSELEINRICHTUNG FÜR EINEN FÜLLADAPTER**
QUICK-CHANGE DEVICE FOR A FILLING ADAPTER
DISPOSITIF DE CHANGEMENT RAPIDE CONÇU POUR UN ADAPTATEUR DE REMPLISSAGE

(30) Priorität: 20.10.2020 DE 102020006487
(43) Veröffentlichungstag der Anmeldung: 30.08.2023
(73) Patentinhaber: Dürr Somac GmbH, 09366 Stollberg (DE)
(72) Erfinder: WIELAND, Frank, 09235 Burkhardtsdorf (DE)
(74) Vertreter: Findeisen Neumann Scheit Partnerschaft mbB
(86) Internationale Anmeldenummer: PCT/DE2021/000174
(87) Internationale Veröffentlichungsnummer: WO 2022/083814

(56) Entgegenhaltungen:
- EP-A1- 1 538 125
- EP-A1- 3 385 217
- EP-A1- 3 521 521
- EP-A2- 1 357 325
- EP-A2- 2 818 596
- WO-A1-2019/099354
- DE-A1- 102018 008 848
- US-A1- 2014 070 126
- US-B2- 10 981 775

## Beschreibung

Die Erfindung betrifft eine Schnellwechseleinrichtung für einen Fülladapter zur Befüllung von Fahrzeugen an Montagelinien der Automobilindustrie, an denen Kreisläufe und Behälter der Fahrzeuge mit Betriebsstoffen befüllt werden, die ausgehend von einer Füllanlage über Schlauchpakete mit pneumatischen und hydraulischen Leitungen sowie einen Fülladapter in die entsprechenden Kreisläufe und Behälter eingespeist werden, wobei an der Trennstelle vom Schlauchpaket zur Füllanlage eine separate Anschlussplatte angeordnet ist, an der alle pneumatischen und hydraulischen Leitungen angeschlossen sind, die über Bohrungen und Dichtungen mit der Füllanlage verbunden werden, wobei als funktionelles Gegenstück zur Anschlussplatte an der Füllanlage ein Anschlussblock ausgestaltet ist und wobei die Anschlussplatte und der Anschlussblock ein kongruentes Bohrbild aufweisen, so dass im Montagezustand im Verbindungsbereich von Anschlussplatte und Anschlussblock konturgleiche Strömungspfade ausgebildet sind.

Bei der Fahrzeugfertigung müssen an Montagelinien der Automobilindustrie Kreisläufe, Behälter und ähnliche Baugruppen der Fahrzeuge erstmals mit Betriebsstoffen befüllt werden. Die Betriebsstoffe, beispielsweise Kraftstoff, Bremsflüssigkeit, Kühlflüssigkeit oder Kältemittel, werden in weitgehend automatisierten Prozessen ausgehend von einer Füllanlage über Schlauchpakete mit einer Vielzahl von pneumatischen und hydraulischen Leitungen sowie Fülladapter in die entsprechenden Kreisläufe und Behälter der Fahrzeuge eingespeist. Die Fülladapter werden manuell durch Werker oder automatisch durch Roboter am Fahrzeug an entsprechende Schnittstellen adaptiert. Das Prinzip solcher Montagelinien ist beispielsweise aus US 2003 016 4200 A1 bekannt.

Da sich die Betriebsstoffe in Abhängigkeit der jeweils konkret zu befüllenden Fahrzeugtypen teilweise unterscheiden, müssen die Fülladapter bei Bedarf ausgetauscht werden. Für den Austausch der Fülladapter wird an der Trennstelle vom Schlauchpaket zur Füllanlage vorzugsweise eine separate Anschlussplatte angeordnet. An dieser Anschlussplatte sind alle pneumatischen und hydraulischen Leitungen angeschlossen, die über Bohrungen und Dichtungen mit der Füllanlage verbunden werden. Als funktionelles Gegenstück zur Anschlussplatte ist an der Füllanlage ein Anschlussblock vorgesehen. Die Anschlussplatte und der Anschlussblock weisen ein kongruentes Bohrbild auf, so dass im montierten Zustand im Verbindungsbereich dieser Baugruppen konturgleiche Strömungspfade ausgebildet werden.

Die Befestigung der Anschlussplatte am Anschlussblock kann in einfacher Weise über eine Schraubverbindung erfolgen. Da ein Wechsel der Fülladapter jedoch oftmals unmittelbar im Fertigungsablauf und somit zwangsläufig unter Zeitdruck notwendig ist, ergibt eine derartige Schraubverbindung wegen der zum Lösen bzw. Verbinden erforderlichen Zeit zwangsläufig Nachteile. Dies hat dazu geführt, dass für die Befestigung der Anschlussplatte am Anschlussblock anstelle von Schraubverbindungen zunehmend Schnellwechseleinrichtungen verwendet werden.

Für die Ausgestaltung derartiger Schnellwechseleinrichtungen sind technische Lösungen geeignet, bei denen eine Baugruppe temporär mit einer anderen Baugruppe verspannt werden muss. Diesbezügliche Spanneinrichtungen sind aus dem Werkzeugbau bekannt und werden beispielsweise in DE 10 2005 043 751 A1 und der EP 2 818 596 beschrieben. Dieser grundlegende Lösungsansatz wird bisher auch für Schnellwechseleinrichtungen zur Befestigung der Anschlussplatte am Anschlussblock eingesetzt. Die Befestigung der Anschlussplatte am Anschlussblock erfolgt dabei über zwei Spannelemente und zwei Einzugsnippel, die jeweils mit manuell betätigbaren Handhebeln in Wirkverbindung stehen. Durch Schwenkbewegung der Handhebel werden die Einzugsnippel in das Spannelement eingezogen. Dadurch werden die Dichtungen zusammengepresst und die Anschlussplatte wird am Anschlussblock lagefest fixiert.

Derartige Schnellwechseleinrichtungen haben sich grundsätzlich bewährt und gewährleisten eine funktionssichere Verbindung von Anschlussplatte und Anschlussblock. Nachteilig ist allerdings, dass es sich um vollständig manuelle Lösungen handelt. Der Werker muss für den Wechsel eines Fülladapters beide Spannelemente händisch lösen und den Fülladapter abnehmen. Ein automatisches Entspannen des Fülladapters ist somit nicht möglich. Weiterhin ergeben die zwei voneinander unabhängig wirkenden Spannelemente bei nicht synchroner Betätigung der Handhebel häufig ein Verkanten der Anschlussplatte, so dass die Funktionssicherheit der gesamten Befüllung beeinträchtigt werden kann. Außerdem muss der Hersteller einer diesbezüglichen Befüllanlage die Spannelemente bisher als separate und kostenintensive Baugruppen von anderen Herstellern beziehen.

Aufgabe der Erfindung ist es, eine Schnellwechseleinrichtung für einen Fülladapter zu schaffen, die eine automatische Verspannung von Anschlussplatte und Anschlussblock ermöglicht und die in eine dieser beiden Baugruppen baulich integriert ist.

Diese Aufgabe wird gelöst, indem der Anschlussblock entlang der Mittellängsachse eine durchgehende Kanalstruktur aufweist, in der eine Zugstange angeordnet ist und indem am Anschlussblock an der zur Anschlussplatte gegenüberliegenden Stirnseite eine Baugruppe mit einem Pneumatikzylinder angeordnet ist, wobei die Zugstange in der Kanalstruktur auf einem Abschnitt ihrer axialen Erstreckung von einem Federpaket umschlossen ist, das an seinen beiden stirnseitigen Endabschnitten mit jeweils einem Befestigungselement an der Zugstange lagefixiert abgestützt ist, wobei der Pneumatikzylinder eine Kolbenfläche aufweist, mit der die obere Stirnseite der Zugstange beaufschlagbar ist, wobei die Zugstange an ihrem dem Pneumatikzylinder gegenüberliegenden Endabschnitt eine Aufnahmegeometrie in Form einer Zylinderschraube aufweist und wobei die Anschlussplatte eine Aufnahmegeometrie in Form eines Langloches derart aufweist, dass die Anschlussplatte an der Zugstange einhängbar ist, indem diese Aufnahmegeometrie bezogen auf die Längsachse der Zugstange von einem Abschnitt mit einem ersten offenen Querschnitt in Form der an der Zugstange als Zylinderschraube ausgebildeten Aufnahmegeometrie in radialer Richtung in einen Abschnitt mit einem zweiten offenen Querschnitt übergeht, der eine schmalere Konturöffnung als der erste offene Querschnitt sowie einen Hinterschnitt aufweist und wobei der innere Bauraum vom Hinterschnitt eine Kontur in Form der an der Zugstange ausgebildeten Zylinderschraube aufweist. Vorteilhafte Ausgestaltungen sind Gegenstand von Unteransprüchen, deren technische Merkmale in einem Ausführungsbeispiel näher beschrieben werden.

Das wesentliche Merkmal der erfindungsgemäßen Schnellwechseleinrichtung für einen Fülladapter ist demzufolge ein im Anschlussblock zentral angeordnetes Federpaket, durch dessen Wirkverbindung mit weiteren Bauteilen eine exakte Fixierung der Anschlussplatte bzw. des Schlauchpaketes am Anschlussblock sowie eine funktionssichere Verpressung der Dichtungen erreicht werden.

Dadurch ergeben sich Vorteile gegenüber dem Stand der Technik. So kann nunmehr der Austausch eines Fülladapters automatisch vorbereitet und ohne separat notwendige Werkzeuge durchgeführt werden. Durch die Federwirkung wird auch im ausgeschalteten Zustand bei einer unterbrochen Strom- und/oder Druckluftversorgung eine Abdichtung zwischen Anschlussblock und Anschlussplatte sichergestellt.

Die erfindungsgemäße Schnellwechseleinrichtung ist sowohl für die erstmalige Ausrüstung einer Befüllanlage beim Hersteller als auch für eine spätere Nachrüstung beim Anwender geeignet. Dabei kann die Schnellwechseleinrichtung für eine Befüllung von Fahrzeugen mit unterschiedlichen Betriebsstoffen eingesetzt werden.

Nachfolgend wird ein Ausführungsbeispiel der Erfindung anhand der Zeichnung erläutert. Es zeigen:
- Fig. 1: den grundsätzlichen Aufbau der Schnellwechseleinrichtung in Schnittdarstellung
- Fig. 2: das Einführen der Zugstange in die Anschlussplatte in einer ersten Position
- Fig. 3: das Einführen der Zugstange in die Anschlussplatte in einer zweiten Position
- Fig. 4: das Einführen der Zugstange in die Anschlussplatte in einer dritten Position

Die in der Zeichnung dargestellte Schnellwechseleinrichtung ist für einen hier nicht näher dargestellten Fülladapter zur Befüllung von Fahrzeugen an Montagelinien der Automobilindustrie konzipiert, an denen Kreisläufe, Behälter und ähnliche Baugruppen der Fahrzeuge mit jeweils unterschiedlichen Betriebsstoffen befüllt werden. Diese Betriebsstoffe (Kraftstoff, Bremsflüssigkeit, Kühlflüssigkeit, Kältemittel usw.) werden ausgehend von einer Füllanlage über Schlauchpakete mit einer Vielzahl von pneumatischen und hydraulischen Leitungen sowie den Fülladapter in die entsprechenden Kreisläufe und Behälter eingespeist.

An der Trennstelle vom Schlauchpaket zur Füllanlage ist eine separate Anschlussplatte 2 angeordnet, an der alle pneumatischen und hydraulischen Leitungen angeschlossen sind, die über Bohrungen und Dichtungen mit der Füllanlage verbunden werden. Als funktionelles Gegenstück zur Anschlussplatte 2 ist an der Füllanlage ein Anschlussblock 1 ausgestaltet. Die Anschlussplatte 2 und der Anschlussblock 1 weisen ein kongruentes Bohrbild auf, so dass im Montagezustand im Verbindungsbereich von Anschlussplatte 2 und Anschlussblock 1 konturgleiche Strömungspfade ausgebildet sind.

Ein derartiger Aufbau ist grundsätzlich bekannt, so dass auf nähere Erläuterungen verzichtet werden kann. Wesentlich im vorliegenden Sachverhalt ist jedoch die konkrete konstruktive Ausgestaltung.

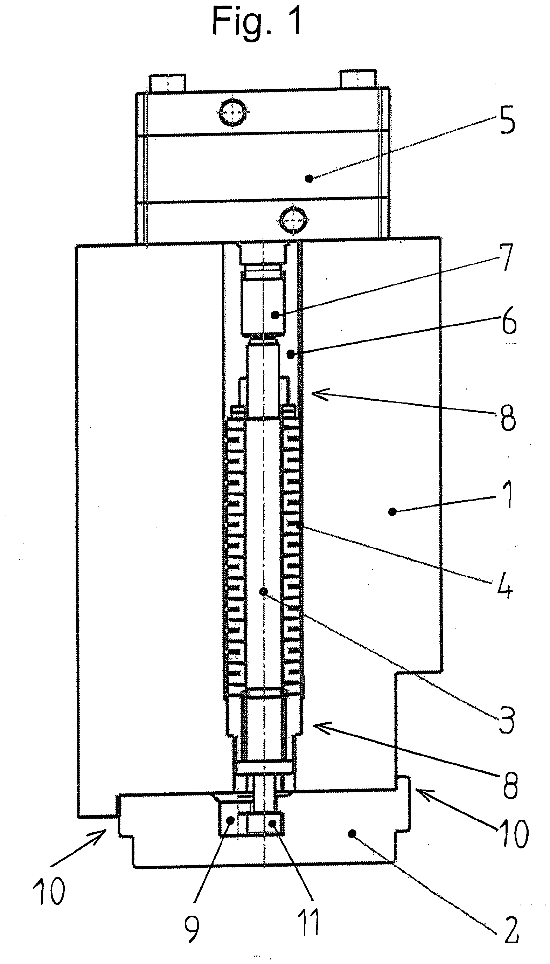

Gemäß **Fig. 1** weist der Anschlussblock 1 entlang der Mittellängsachse eine durchgehende Kanalstruktur 6 auf. Im Innenraum der Kanalstruktur 6 ist eine Zugstange 3 angeordnet. Am Anschlussblock 1 ist an der zur Anschlussplatte 2 gegenüberliegenden Stirnseite eine Baugruppe 5 mit einem Pneumatikzylinder 7 angeordnet. Der Pneumatikzylinder 7 weist eine Kolbenfläche auf, mit der die obere Stirnseite der Zugstange 3 beaufschlagbar ist.

Die Zugstange 3 ist auf einem Abschnitt ihrer axialen Erstreckung von einem Federpaket 4 umschlossen. Das Federpaket 4 ist an seinen beiden stirnseitigen Endabschnitten mit jeweils einem Befestigungselement 8 lagefixiert an der Zugstange 3 abgestützt. Vorzugsweise werden hierfür jeweils eine auf jeder Stirnseite des Federpaketes 4 aufliegende Scheibe oder Buchse und eine auf einem Gewindeabschnitt der Zugstange 3 bewegbare Schraube verwendet. Alternativ ist eine Ausführung mit jeweils einer auf jeder Stirnseite des Federpaketes 4 aufliegenden Scheibe oder Buchse und einen in einer radial verlaufenden Bohrung der Zugstange 3 abstützbaren Splint möglich. Die Befestigungselemente 8 können jedoch auch andersartig ausgeführt werden.

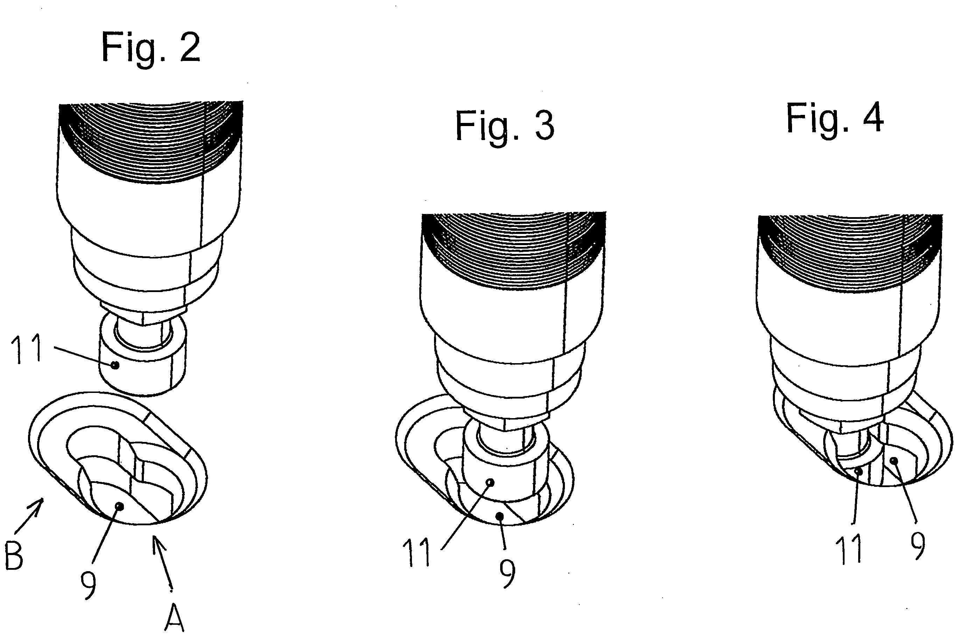

Die Zugstange 3 weist an ihrem dem Pneumatikzylinder 7 gegenüberliegenden Endabschnitt eine Aufnahmegeometrie 11 in Form einer Zylinderschraube auf, die aus **Fig. 2** und **Fig. 3** in vergrößerter Darstellung ersichtlich ist.

Die Anschlussplatte 2 weist eine Aufnahmegeometrie 9 auf, deren Aufbau primär aus **Fig. 2** ersichtlich ist. Diese Aufnahmegeometrie 9 ist so ausgestaltet, dass die Anschlussplatte 2 an der Zugstange 3 einhängbar ist. Hierfür ist die Aufnahmegeometrie 9 in Form eines Langloches ausgestaltet und weist - bezogen auf die Längsachse der Zugstange 3 - einen Abschnitt "A" mit einem ersten offenen Querschnitt in Form der an der Zugstange 3 ausgebildeten Zylinderschraube 11 auf. Der Abschnitt "A" geht in radialer Richtung in einen Abschnitt "B" mit einem zweiten offenen Querschnitt über. Der Abschnitt "B" weist eine schmalere Konturöffnung auf als der erste offene Querschnitt im Abschnitt "A". Außerdem weist der Abschnitt "B" einen Hinterschnitt auf. Der innere Bauraum vom Hinterschnitt weist eine Kontur auf in Form der an der Zugstange 3 ausgebildeten Zylinderschraube 11.

Durch diese geometrischen Ausgestaltungen der Aufnahmegeometrien 9 und 11 kann die Anschlussplatte 2 an der Zugstange 3 eingehängt werden. Demzufolge kann über die Zugstange 3 eine kraftschlüssige Verbindung von Anschlussplatte 2 und Anschlussblock 1 erreicht werden,

Eine vorteilhafte Ausgestaltung sieht vor, dass der Anschlussblock 1 und die Anschlussplatte 2 jeweils mindestens einen zueinander kongruenten und miteinander in Wirkverbindung bringbaren stufenförmigen Bauteilabschnitt 10 aufweisen. Gemäß der in Fig. 1 dargestellten Ausführung können auch zwei solche Bauteilabschnitte 10 vorgesehen werden. Somit wird zusätzlich zur kraftschlüssigen Verbindung über die Zugstange 3 eine formschlüssige Verbindung über die Bauteilabschnitte 10 erreicht, so dass eine exakte Lagefixierung von Anschlussblock 1 und Anschlussplatte 2 gewährleistet ist.

Die in der Zeichnung dargestellte Schnellwechseleinrichtung hat folgenden Funktionsablauf:
**Fig. 2** zeigt die Baugruppen im gelösten Zustand von Anschlussblock 1 mit der als Zylinderschraube ausgestalteten Aufnahmegeometrie 11 und Anschlussplatte 2 mit der als Langloch ausgestalteten Aufnahmegeometrie 9.

Um die Anschlussplatte 2 mitsamt dem Schlauchpaket am Anschlussblock 1 zu montieren, muss zunächst das Federpaket 4 vorgespannt werden. Dazu drückt der Pneumatikzylinder 7 von oben auf die Zugstange 3 und komprimiert das Federpaket 4. Die im unteren Bereich der Zugstange 3 ausgestaltete Aufnahmegeometrie 11 in Form einer Zylinderschraube wird beim Komprimieren des Federpaketes 4 nach unten bewegt, siehe **Fig. 3****.** Mittels der speziellen Aufnahmegeometrie 9 an der Anschlussplatte 2 ist ein Einhängen dieser Anschlussplatte 2 an der Zugstange 3 möglich.

Sobald die Anschlussplatte 2 gemäß **Fig. 4** an der Zugstange 3 eingehängt ist, wird der Pneumatikzylinder 7 wieder zurückgefahren und das Federpaket 4 kann sich ein Stück entspannen. Dabei wird die Zugstange 3 nach oben gezogen und nimmt gleichzeitig die Anschlussplatte 2 mit nach oben. Sobald die Anschlussplatte 2 am Anschlussblock 1 anliegt, werden die Dichtungen verpresst. Durch das immer noch vorgespannte Federpaket 4 wird die Anschlussplatte 2 an den Anschlussblock 1 gezogen und damit fixiert.

Diese technische Lösung ermöglicht eine vollautomatische Vorbereitung eines Wechsels eines Fülladapters. Die Anlage bereitet den Adapterwechsel in einem speziellen Schritt vor, indem die Hydraulikleitungen entleert und die Steuerleitungen drucklos geschaltet werden. Die Anschlussplatte 2 mitsamt dem Schlauchpaket wird entriegelt. Nach dem Wechsel ist ein ebenso automatisches Ankoppeln des Fülladapters möglich. Die Anschlussplatte 2 mit dem Schlauchpaket muss vom Werker lediglich abgenommen und wieder eingehängt werden. Da die Fixierung über das Federpaket 4 erfolgt, ist eine Lagefixierung von Anschlussblock 1 und Anschlussplatte 2 auch bei ausgeschalteter, druckloser Anlage sicher gewährleistet.

### Bezugszeichenliste

- 1: Anschlussblock
- 2: Anschlussplatte
- 3: Zugstange
- 4: Federpaket
- 5: Baugruppe für Pneumatik
- 6: Kanalstruktur im Anschlussblock
- 7: Pneumatikzylinder
- 8: Befestigungselement
- 9: Aufnahmegeometrie an Anschlussplatte / Langloch
- 10: stufenförmiger Bauteilabschnitt
- 11: Aufnahmegeometrie am Anschlussblock / Zylinderschraube
- A: Abschnitt mit großer Querschnittsöffnung an Aufnahmegeometrie der Anschlussplatte
- B: Abschnitt mit Hinterschnitt an Aufnahmegeometrie der Anschlussplatte

## Patentansprüche

1. Schnellwechseleinrichtung für einen Fülladapter zur Befüllung von Fahrzeugen an Montagelinien der Automobilindustrie, an denen Kreisläufe und Behälter der Fahrzeuge mit Betriebsstoffen befüllt werden, die ausgehend von einer Füllanlage über Schlauchpakete mit pneumatischen und hydraulischen Leitungen sowie einen Fülladapter in die entsprechenden Kreisläufe und Behälter eingespeist werden, wobei an der Trennstelle vom Schlauchpaket zur Füllanlage eine separate Anschlussplatte angeordnet ist, an der alle pneumatischen und hydraulischen Leitungen angeschlossen sind, die über Bohrungen und Dichtungen mit der Füllanlage verbunden werden, wobei als funktionelles Gegenstück zur Anschlussplatte an der Füllanlage ein Anschlussblock ausgestaltet ist und wobei die Anschlussplatte und der Anschlussblock ein kongruentes Bohrbild aufweisen, so dass im Montagezustand im Verbindungsbereich von Anschlussplatte und Anschlussblock konturgleiche Strömungspfade ausgebildet sind, **dadurch gekennzeichnet,**
**dass** der Anschlussblock (1) entlang seiner Mittellängsachse eine durchgehende Kanalstruktur (6) aufweist, in der eine Zugstange (3) angeordnet ist und dass am Anschlussblock (1) an der zur Anschlussplatte (2) gegenüberliegenden Stirnseite eine Baugruppe (5) mit einem Pneumatikzylinder (7) angeordnet ist, wobei die Zugstange (3) in der Kanalstruktur (6) auf einem Abschnitt ihrer axialen Erstreckung von einem Federpaket (4) umschlossen ist, das an seinen beiden stirnseitigen Endabschnitten mit jeweils einem Befestigungselement (8) an der Zugstange (3) lagefixiert abgestützt ist, wobei der Pneumatikzylinder (7) eine Kolbenfläche aufweist, mit der die obere Stirnseite der Zugstange (3) beaufschlagbar ist, wobei die Zugstange (3) an ihrem dem Pneumatikzylinder (7) gegenüberliegenden Endabschnitt eine Aufnahmegeometrie (11) in Form einer Zylinderschraube aufweist und wobei die Anschlussplatte (2) eine Aufnahmegeometrie (9) in Form eines Langloches derart aufweist, dass die Anschlussplatte (2) an der Zugstange (3) einhängbar ist, indem diese Aufnahmegeometrie (9) bezogen auf die Längsachse der Zugstange (3) von einem Abschnitt (A) mit einem ersten offenen Querschnitt in Form der an der Zugstange (3) als Zylinderschraube ausgebildeten Aufnahmegeometrie (11) in radialer Richtung in einen Abschnitt (B) mit einem zweiten offenen Querschnitt übergeht, der eine schmalere Konturöffnung als der erste offene Querschnitt sowie einen Hinterschnitt aufweist und wobei der innere Bauraum vom Hinterschnitt eine Kontur in Form der an der Zugstange (3) ausgebildeten Zylinderschraube (11) aufweist.

2. Schnellwechseleinrichtung nach Anspruch 1, **dadurch gekennzeichnet, dass** der Anschlussblock (1) und die Anschlussplatte (2) jeweils mindestens einen zueinander kongruenten und miteinander in Wirkverbindung bringbaren stufenförmigen Bauteilabschnitt (10) aufweisen.

3. Schnellwechseleinrichtung nach Anspruch 1, **dadurch gekennzeichnet, dass** die Befestigungselemente (8) zur lagefixierten Abstützung des Federpaketes (4) an der Zugstange (3) jeweils eine auf der Stirnseite des Federpaketes (4) aufliegende Scheibe oder Buchse und eine auf einem Gewindeabschnitt der Zugstange (3) bewegbare Schraube umfassen.

4. Schnellwechseleinrichtung nach Anspruch 1, **dadurch gekennzeichnet, dass** die Befestigungselemente (8) zur lagefixierten Abstützung des Federpaketes (4) an der Zugstange (3) jeweils eine auf der Stirnseite des Federpaketes (4) aufliegende Scheibe oder Buchse und einen in einer radial verlaufenden Bohrung der Zugstange (3) abstützbaren Splint umfassen.

## Claims

1. A quick-change device for a filling adapter for filling vehicles on assembly lines in the automotive industry, on which assembly line circuits and tanks of the vehicles are filled with service fluids, which are fed into the corresponding circuits and tanks from a filling system through hose sets having pneumatic and hydraulic lines and through a filling adapter, wherein a separate connection plate is arranged at the point of separation of the hose set from the filling system, to which all pneumatic and hydraulic lines, which are connected to the filling system through bores and seals, are attached, wherein a connection block is formed on the filling system as a functional counterpart to the connection plate and wherein the connection plate and the connection block have a congruent bore pattern so that, in the assembled state, flow paths with the same contour are formed in the connection region of the connection plate and the connection block, **characterized in that**
the connection block (1) has, along its central longitudinal axis, a channel structure (6) extending all the way through, in which a pull rod (3) is arranged, and **in that** an assembly (5) having a pneumatic cylinder (7) is positioned at the end of the connection block (1) opposite the connection plate (2), wherein the pull rod (3) is encased by a spring set (4), whose two ends are fixedly supported on the pull rod (3) over a portion of its axial extent in the channel structure (6) by means of one fastening element (8) in each case; wherein the pneumatic cylinder (7) has a piston surface by means of which the upper end of the pull rod (3) can be acted upon; wherein the pull rod (3) has, on its end opposite the pneumatic cylinder (7), a holding geometry (11) in the form of a cylinder screw; and wherein the connection plate (2) has a holding geometry (9) in the form of a slotted hole, such that the connection plate (2) can be hooked on the pull rod (3), since that holding geometry (9) transitions, with respect to the longitudinal axis of the pull rod (3), from a portion (A) having a first open cross-section in the shape of the holding geometry (11) formed as a cylinder screw onto the pull rod (3), in the radial direction, into a portion (B) having a second open cross-section which has a narrower contour opening than the first open cross-section and has an undercut, and wherein the inner installation space of the undercut has a contour in the form of the cylinder screw (11) formed on the pull rod (3).

2. The quick-change device according to claim 1, **characterized in that** the connection block (1) and the connection plate (2) each have at least one step-shaped component portion (10) which are congruent with one another and can be brought into operative connection with one another.

3. The quick-change device according to claim 1, **characterized in that** the fastening elements (8) for fixedly supporting the spring set (4) on the pull rod (3) each comprise a washer or bushing resting on the end of the spring set (4) and a screw movable on a threaded portion of the pull rod (3).

4. The quick-change device according to claim 1, **characterized in that** the fastening elements (8) for fixedly supporting the spring set (4) on the pull rod (3) each comprise a washer or bushing resting on the end of the spring set (4) and a split pin which can be supported in a radially extending bore of the pull rod (3).

## Revendications

1. Dispositif de changement rapide pour un adaptateur de remplissage destiné au remplissage de véhicules sur des lignes de montage de l'industrie automobile, sur lesquelles des circuits et des réservoirs de véhicules sont remplis de consommables qui, à partir d'une installation de remplissage, sont introduits dans les circuits et les réservoirs correspondants par l'intermédiaire d'ensembles de tuyaux comprenant des conduites pneumatiques et hydrauliques ainsi qu'un adaptateur de remplissage, une plaque de raccordement séparée étant disposée au point de séparation de l'ensemble de tuyaux et de l'installation de remplissage, à laquelle sont raccordées toutes les conduites pneumatiques et hydrauliques reliées à l'installation de remplissage par des alésages et des joints d'étanchéité, un bloc de raccordement étant conçu comme le pendant fonctionnel de la plaque de raccordement à l'installation de remplissage, la plaque de raccordement ainsi que le bloc de raccordement présentant un schéma d'alésages congruent, de sorte qu'à l'état de montage, des voies d'écoulement de même contour sont formées dans la zone de jonction de la plaque de raccordement et du bloc de raccordement, **caractérisé en ce que**,
le bloc de raccordement (1) présente le long de son axe longitudinal central une structure de canal continue (6) dans laquelle est disposée une barre de traction (3) et **en ce que** sur le bloc de raccordement (1), du côté frontal opposé à la plaque de raccordement (2), est disposé un sous-ensemble (5) avec un vérin pneumatique (7), la barre de traction (3) étant entourée dans la structure de canal (6) sur une section de son extension axiale par un ensemble de ressorts (4), soutenu en position fixe sur la barre de traction (3) aux deux sections d'extrémité frontales par respectivement un élément de fixation (8), le vérin pneumatique (7) présentant une surface de piston à l'aide de laquelle la face frontale supérieure de la barre de traction (3) peut être sollicitée, la barre de traction (3) présentant, sur sa section d'extrémité opposée au vérin pneumatique (7), une géométrie de réception (11) en la forme d'une vis cylindrique et la plaque de raccordement (2) présentant une géométrie de réception (9) en la forme d'un trou oblong, de sorte que la plaque de raccordement (2) puisse être accrochée à la barre de traction (3), **en ce que** cette géométrie de réception (9) passe, par rapport à l'axe longitudinal de la barre de traction (3) d'une section (A) avec une première section transversale ouverte en la forme de la géométrie de réception (11) réalisée sur la barre de traction (3) en la forme d'une vis cylindrique dans la direction radiale, à une section (B) avec une deuxième section transversale ouverte, présentant une ouverture de contour plus étroite que la première section transversale ouverte ainsi qu'une contre-dépouille, l'espace de construction intérieur de la contre-dépouille présentant un contour en la forme de la vis cylindrique (11) réalisée sur la barre de traction (3).

2. Dispositif de changement rapide selon la revendication 1, **caractérisé en ce que** le bloc de raccordement (1) et la plaque de raccordement (2) présentent chacun au moins une section de composants étagés (10), congruente l'une par rapport à l'autre et pouvant être amenées en liaison active l'une avec l'autre.

3. Dispositif de changement rapide selon la revendication 1, **caractérisé en ce que** les éléments de fixation (8) pour l'appui en position fixe de l'ensemble de ressorts (4) sur la barre de traction (3) comprennent chacun une rondelle ou une douille reposant sur la face frontale de l'ensemble de-ressorts (4) et une vis mobile sur une portion filetée de la barre de traction (3).

4. Dispositif de changement rapide selon la revendication 1, **caractérisé en ce que** les éléments de fixation (8) pour l'appui en position fixe de l'ensemble de ressorts (4) sur la barre de traction (3) comprennent chacun une rondelle ou une douille reposant sur la face frontale de l'ensemble de ressorts (4) et une goupille pouvant s'appuyer dans un alésage de la barre de traction (3) orienté radialement.
